# EUROPEAN PATENT APPLICATION

(11) **EP 4 779 138 A1**
(43) Date of publication of application: **22.07.2026**
(21) Application number: 26152731.1
(22) Date of filing: 19.01.2026
(51) Int. Cl.: F02C 7/042, F02C 7/057, F02C 9/20, F02K 3/06, F04D 29/56, F02K 3/075

(54) **GAS TURBINE ENGINE WITH VARIABLE COMPRESSOR INLET**

(30) Priority: 17.01.2025 US 202519029099
(71) Applicant: RTX Corporation, Farmington, CT 06032 (US)
(72) Inventor: YAZICI, Murat, Glastonbury (US); MORTON, Jeffrey T., Manchester (US); GIANNAKOPOULOS, Konstantinos P., Middletown (US); CLARK, Thomas E., Wells (US); NOLAN, Sean P R, Wethersfield (US)
(74) Representative: Dehns

(57) **Abstract**

A gas turbine engine (20) is provided that includes a fan section (28), a fan bypass air path (38), a compressor section (30), a combustion section (32), a turbine section (34), an annular compressor inlet (42), and an inlet panel structure actuation system (54). The annular compressor inlet (42) is defined by an inner radial surface (46) and a plurality of inlet panel structures (52). Each inlet panel structure (52) includes an inlet side segment (56) and a bypass side segment (58). The inlet side segments (56) collectively define an outer radial surface (48) of the compressor inlet (42). The inlet side segment (56) and the bypass side segment (58) of each inlet panel structure (52) intersect at an inlet panel leading edge. The inlet panel structures (52) are disposable in a radial inner most configuration and in a radial outer most configuration. The inlet panel structure actuation system (54) is configured to selectively actuate the inlet panel structures (52) between the radial inner most configuration and the radial outer most configuration.

## Description

### BACKGROUND OF THE INVENTION

### 1. Technical Field

The present disclosure relates to gas turbine engines in general and compressor inlets in particular.

### 2. Background Information

A turbofan gas turbine engine includes a fan section, a compressor section, a combustion section, and a turbine section. Air entering the engine passes through the fan section. A portion of the air exiting the fan section enters a core gas path and the remainder enters a bypass air path disposed radially outside of the core of the engine. Air passing through the bypass air path produces thrust and exits the gas turbine engine. The core gas path extends through the core of the engine, including the compressor section, the combustion section, and the turbine section. Core gas (i.e., a mixture of non-combusted air and gaseous combustion products) exiting the turbine section passes through a turbine exhaust case and exits the engine.

A person of skill in the art will recognize that dirt and debris ingested into the core of the engine is detrimental to the engine and its operation. It would be useful to provide a gas turbine engine that is configured to decrease the amount of dirt and debris ingested into the core of the engine.

### SUMMARY

According to an aspect of the present disclosure, a gas turbine engine is provided that includes a fan section, a fan bypass air path, a compressor section, a combustion section, a turbine section, an annular compressor inlet, and an inlet panel structure actuation system. The annular compressor inlet is defined by an inner radial surface and a plurality of inlet panel structures. Each inlet panel structure includes an inlet side segment and a bypass side segment, and the inlet side segments collectively define an outer radial surface of the compressor inlet. The inlet side segment and the bypass side segment of each inlet panel structure intersect at an inlet panel leading edge. The inlet panel structures are disposable in a radial inner most configuration and in a radial outer most configuration. In the radial inner most configuration, the inlet panel leading edge is disposed a first distance from the inner radial surface. In the radial outer most configuration, the inlet panel leading edge is disposed a second distance from the inner radial surface. The second distance is greater than the first distance. The inlet panel structure actuation system is configured to selectively actuate the inlet panel structures between the radial inner most configuration and the radial outer most configuration.

In any of the aspects or embodiments described above and herein, the gas turbine engine may be configured to receive an inflow of air and may be configured such that the inflow of air received by the gas turbine engine comprises a first portion and a second portion, wherein the first portion is received within the compressor inlet and the second portion is received within the fan bypass air path.

In any of the aspects or embodiments described above and herein, the fan bypass air path may be defined by an inner radial structure and an outer radial structure, and the bypass segment of each inlet panel structure may be engaged with the inner radial structure of the fan bypass air path.

In any of the aspects or embodiments described above and herein, in the radial inner most configuration the inlet panel leading edges may be collectively disposed at a first radius, and in the radial outer most configuration the inlet panel leading edges may be collectively disposed at a second radius, and the second radius is greater than the first radius.

In any of the aspects or embodiments described above and herein, the inlet panel structure actuation system may be configured to selectively pivot the inlet panel structures to translate the inlet panel leading edge of each inlet panel structure radially inward or radially outward.

In any of the aspects or embodiments described above and herein, the compressor inlet may be disposed downstream of the fan section.

In any of the aspects or embodiments described above and herein, inlet guide vanes may be disposed within the compressor inlet.

In any of the aspects or embodiments described above and herein, the inlet panel structure actuation system may be configured to selectively pivot the inlet panel structures to translate the inlet panel leading edge of each inlet panel structure radially relative to the inlet guide vanes, and the inlet guide vanes may be configured for selective positioning.

In any of the aspects or embodiments described above and herein, the inlet panel structure actuation system may be configured to selectively actuate the inlet panel structures in coordination with selective positioning of the inlet guide vanes.

In any of the aspects or embodiments described above and herein, the inlet panel structure actuation system may include an actuator and a controller, wherein the controller is in communication with the actuator and a non-transitory memory storing instructions. The instructions when executed may cause the processor to control the actuator to actuate the inlet panel structures between the radial inner most configuration and the radial outer most configuration.

In any of the aspects or embodiments described above and herein, the controller may be configured to receive input commands from an operator and act on the input commands to actuate the inlet panel structures between the radial inner most configuration and the radial outer most configuration.

In any of the aspects or embodiments described above and herein, the controller may be configured to receive an engine power setting input and execute the stored instructions based on the engine power setting input to actuate the inlet panel structures between the radial inner most configuration and the radial outer most configuration.

In any of the aspects or embodiments described above and herein, the controller may be configured to receive an aircraft altitude input value and execute the stored instructions based on the aircraft altitude input value to actuate the inlet panel structures between the radial inner most configuration and the radial outer most configuration.

In any of the aspects or embodiments described above and herein, the controller may be configured to receive an aircraft geographical location data input and execute the stored instructions based on the aircraft geographical location data input to actuate the inlet panel structures between the radial inner most configuration and the radial outer most configuration.

In any of the aspects or embodiments described above and herein, the controller may be configured to receive an operating parameter input and execute the stored instructions using the operating parameter input to determine a configuration of the annular compressor inlet.

In any of the aspects or embodiments described above and herein, the inlet panel leading edge may be disposed at an inflection point between the inlet side segment and the bypass side segment of each inlet panel structure.

In any of the aspects or embodiments described above and herein, the inlet side segment and the bypass side segment may be independent of one another.

In any of the aspects or embodiments described above and herein, the inlet side segment and the bypass side segment may be integrally formed with one another.

In any of the aspects or embodiments described above and herein, the gas turbine engine may have a geared turbofan configuration.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine embodiment.
FIG. 2 is a diagrammatic partial view of a gas turbine engine embodiment showing a compressor inlet.
FIG. 3 is a diagrammatic partial view of a gas turbine engine showing a present disclosure compressor inlet embodiment in a radial inner most configuration.
FIG. 3A is a diagrammatic partial view of a gas turbine engine showing a present disclosure compressor inlet embodiment in a radial outer most configuration.
FIG. 4 is a diagrammatic view of a present disclosure inlet panel structure embodiment.
FIG. 4A is a diagrammatic view of a present disclosure inlet panel structure embodiment.

### DETAILED DESCRIPTION

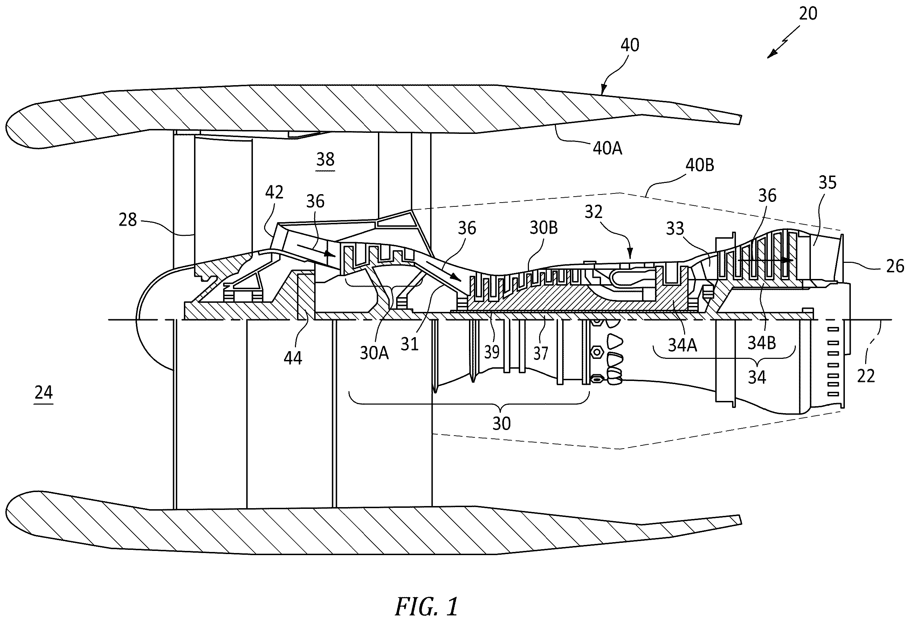

FIG. 1 shows a diagrammatic view of a gas turbine engine 20. The gas turbine engine 20 extends along an axial centerline 22 between an upstream airflow inlet 24 and a downstream exhaust 26. The gas turbine engine 20 includes a fan section 28, a compressor section 30, a combustion section 32, and a turbine section 34. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A is connected to and driven by the LPT 34B through a low-speed shaft 37. The HPC 30B is connected to and driven by the HPT 34A through a high-speed shaft 39. A geared architecture 44 (e.g., a reduction gear box) may be included that enables the engine 20 to drive the fan section 28 at a different rotational speed than the compressor section 30 or the turbine section 34. The gas turbine engine configuration diagrammatically shown in FIG. 1 may be referred to as a geared turbofan configuration.

Air entering the gas turbine engine 20 through the airflow inlet 24 (forward of the fan section 28) is bisected between a core gas path 36 and a fan bypass air path 38. A portion of the air entering the gas turbine engine 20 passes through the fan section 28 and enters the core gas path 36 via an annular compressor inlet 42. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The remainder of the air entering the gas turbine engine 20 passes through the fan section 28 and enters the fan bypass air path 38 which is disposed radially outside of the core of the engine 20. The gas turbine engine 20 is diagrammatically shown in FIG. 1 engaged with a nacelle structure 40. The nacelle structure 40 is configured to provide an annular region radially outside of the core of the gas turbine engine 20. The annular region (which serves as the fan bypass path 38) is defined by an outer radial structure 40A and an inner radial structure 40B.

The gas turbine engine 20 configuration diagrammatically shown in FIG. 1 is an example provided to facilitate the description herein. The present disclosure may be implemented in a variety of different gas turbine engine configurations and is not therefore limited to the gas turbine engine 20 configuration diagrammatically shown in FIG. 1. The nacelle structure diagrammatically shown in FIG. 1 is provided to facilitate the description herein and the present disclosure is not limited to this nacelle structure example.

The terms "forward", "leading", "aft, "trailing" are used herein to indicate the relative position of a component or surface. As air passes through the engine 20, a leading edge of a stator vane or rotor blade encounters the air before the trailing edge of the same. In a conventional axial engine such as that shown in FIG. 1, the fan section 28 is forward of the compressor section 30 and the turbine section 34 is aft of the compressor section 30. The terms "inner radial" and "outer radial" refer to relative radial positions from the engine centerline. An inner radial component or path is disposed radially closer to the engine centerline than an outer radial component or path.

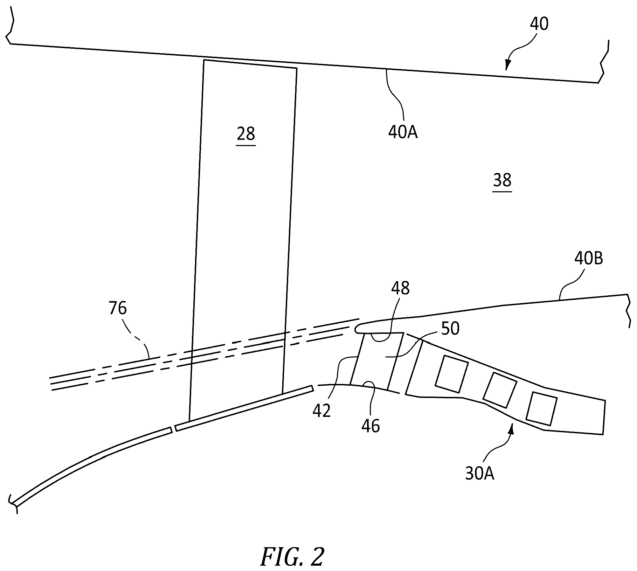

Referring to FIG. 2, the inlet to the core gas path (i.e., referred to hereinafter as the "compressor inlet 42") is configured as an annular opening defined by an inner radial surface 46 and an outer radial surface 48 (defined by an inner radial surface of a inlet panel structure detailed herein). In the embodiment shown in FIG. 2, a positionally fixed compressor inlet guide vane (i.e., "compressor IGV 50") is shown disposed extending in a generally radial direction across the annular compressor inlet 42. In this embodiment, a plurality of compressor IGVs 50 are distributed around the circumference of the compressor inlet 42. Also in this embodiment, the compressor IGVs 50 include an inner radial platform that acts as the inner radial surface 46 of the compressor inlet 42. The present disclosure does not require the inclusion of compressor IGVs 50 disposed at the compressor inlet 42. In some applications, an alternative type of flow directing structure (e.g., a fan exit stator) may be disposed in the compressor inlet 42, or fan exit stators may be paired with downstream compressor IGVs, or the like. To facilitate the description herein, a flow directing structure (such as a compressor IGV, or a fan exit stator, or the like) disposed at the annular compressor inlet 42 will be referred to as a "compressor IGV 50" unless otherwise noted.

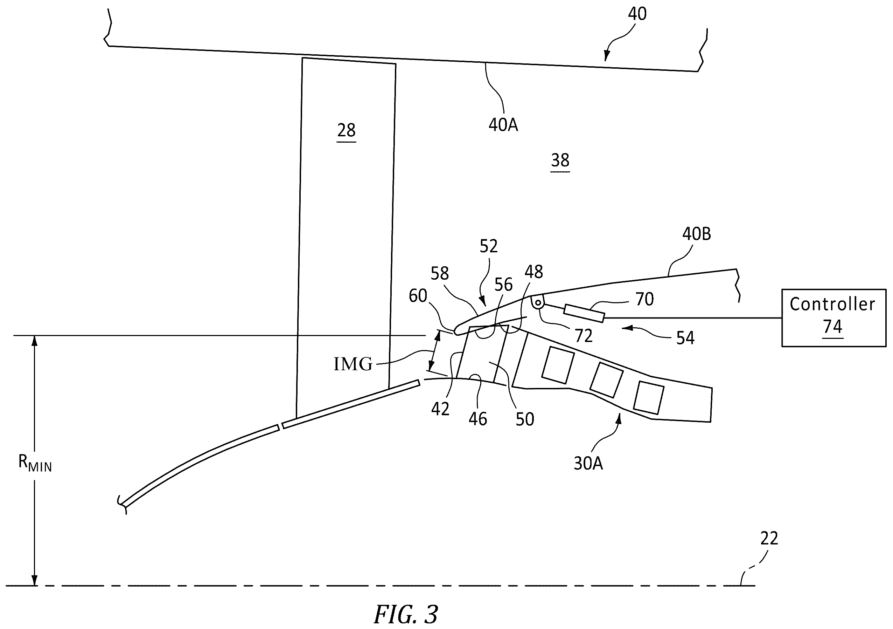

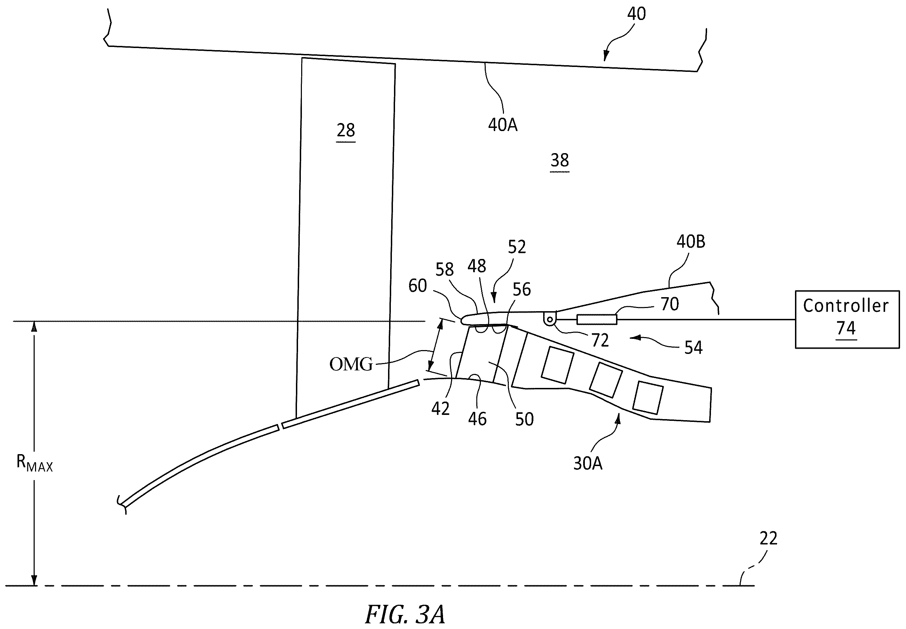

Referring to FIGS. 3 and 3A, embodiments of the present disclosure include a plurality of compressor inlet panel structures 52 and an inlet panel structure actuation system 54.

The compressor inlet panel structures 52 define the outer radial side of the compressor inlet 42. Each of the inlet panel structures 52 includes an inlet side segment 56 and a bypass side segment 58. The inlet side segment 56 and the bypass side segment 58 intersect with one another at a forwardly disposed inflection point, referred to hereinafter as the inlet panel (IP) leading edge 60. The inlet side segment 56 defines the outer radial surface 48 of the compressor inlet 42. The bypass side segment 58 extends in an aft direction (radially outside of the inlet side segment 56) and engages with a portion of the inner radial structure 40B of the bypass air path 38. The inlet side segment 56 and the bypass side segment 58 of an inlet panel structure 52 may be independent of one another or an inlet panel structure 52 may include an inlet side segment 56 and a bypass side segment 58 integrally formed as a unitary construct. As will be detailed herein, the inlet panel structures 52 may be actuated to change the configuration of the compressor inlet 42.

The inlet panel structures 52 may be actuated between a plurality of different circumferential configurations within a range from a radial inner most configuration to a radial outer most configuration. In the radial inner most configuration, the IP leading edges 60 are disposed at a minimum radius ("R_{MIN}" - see FIG. 3) from the engine centerline 22, and the circumference formed by the IP leading edges 60 is a minimum circumference. In the radial outer most configuration, the IP leading edges 60 are disposed at a maximum radius ("R_{MAX}" - see FIG. 3A) from the engine centerline 22, and the circumference formed by the IP leading edges 60 is a maximum circumference. Hence, the maximum radius is greater than the minimum radius (R_{MAX} > R_{MIN}), and the maximum circumference is greater than the minimum circumference. The flow area of the compressor inlet 42 (i.e., the area through which air may flow through the compressor inlet 42 and into the compressor section 30) is at a minimum when the inlet panel structures 52 are disposed in the radial inner most configuration, and is at a maximum when the inlet panel structures 52 are disposed in the radial outer most configuration. The inlet panel structures 52 are not limited to the radial inner and outer most configurations, and may be actuated to a plurality of different radial positions therebetween.

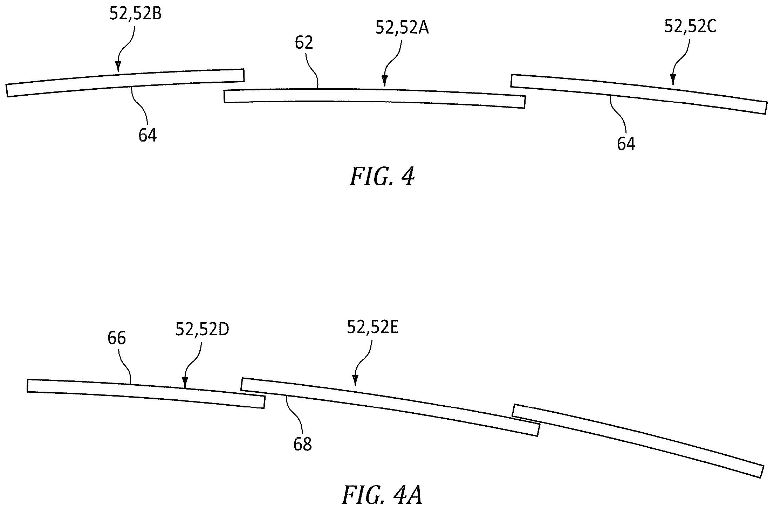

The inlet panel structures 52 are configured to permit articulation between the radial inner most configuration to the radial outer most configuration. For example, a given inlet panel structure 52 may overlap with a first adjacent inlet panel structure disposed on a first circumferential side, and with a second adjacent inlet panel structure disposed on a second circumferential side. In the embodiment diagrammatically illustrated in FIG. 4, an outer radial surface 62 of a center inlet panel structure 52A is overlapped by the inner radial surface 64 of inlet panel structures 52B, 52C disposed on each circumferential side. The circumference formed by the IP leading edges 60 (and therefore the flow area of the compressor inlet 42) may be decreased by actuating the inlet panel structures 52 so that the IP leading edges 60 (e.g., see FIGS. 3, 3A) pivot radially inward. As the IP leading edges 60 pivot radially inward, the overlap between adjacent inlet panel structures 52 increases and the circumference at the IP leading edges 60 decreases. Conversely, the circumference formed by the IP leading edges 60 (and therefore the flow area of the compressor inlet 42) may be increased by actuating the inlet panel structures 52 so that the IP leading edges 60 pivot radially outward. As the IP leading edges 60 pivot radially outward, the overlap between adjacent inlet panel structures 52 decreases and the circumference at the IP leading edges 60 increases. FIG. 4A diagrammatically illustrates another embodiment wherein the outer radial surface 66 of a first inlet panel structure 52D is overlapped by the inner radial surface 68 of an adjacent second inlet panel structure 52E, and this pattern repeats circumferentially. Here again, the circumference formed by the IP leading edges 60 (and therefore the flow area of the compressor inlet 42) may be decreased or increased by actuating the inlet panel structures 52; e.g., pivoting the IP leading edges 60 radially inwardly or outwardly. The configurations of the inlet panel structures 52 shown in FIGS. 4 and 4A are provided to illustrate examples of inlet panel structures 52 that may be actuated to increase or decrease the circumference formed by the IP leading edges 60 and the flow area of the compressor inlet 42. The present disclosure is not limited to these inlet panel structure configurations.

Referring to FIGS. 3 and 3A, embodiments of the present disclosure include an inlet panel structure actuation system 54 that is operable to actuate the inlet panel structures 52 between the radial inner most configuration and the radial outer most configuration. The actuation system 54 includes one or more actuators 70 and one or more linkages 72 in communication with the actuator(s). The actuators 70 may be electromechanically operable, or fluidically operable (e.g., hydraulic or pneumatic), or the like. The present disclosure is not limited to any particular type of actuator 70. The linkage 72 is configured to accept drive motion from the actuator(s) 70 (e.g., either rotational drive, or linear drive, or any combination thereof) and transfer that drive motion to the inlet panel structures 52, thereby causing the inlet panel structures 52 to articulate from a current configuration toward the radial inner most configuration or toward the radial outer most configuration. In those present disclosure embodiments that include compressor IGVs 50 disposed across the annular compressor inlet 42, the inlet panel structures 52 and the inlet panel structure actuation system 54 may be configured to pivot the IP leading edges 60 (radially inward and outward) relative to the IGVs 50 when transitioning between the radial inner most configuration and the radial outer most configuration. Sensors (not shown) may be used to provide feedback information regarding the position of the inlet panel structures 52.

In some embodiments, the inlet panel structure actuation system 54 may include or be in communication with a controller 74 that is in communication with other system components such as actuators 70 within the inlet panel structure actuation system 54; e.g., to control the operation of the inlet panel structure actuation system 54 and/or to receive signals therefrom and/or transmit signals thereto to perform the functions described herein. The controller 74 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present disclosure to accomplish the same algorithmically and/or coordination of system components. The controller 74 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 74 may include, or may be in communication with, an input device (not shown) that enables a user to enter data and/or instructions, and may include, or be in communication with, an output device (not shown) configured, for example to display information (e.g., a visual display, or the like), or to transfer data, etc. Communications between the controller 74 and other system components may be via a hardwire connection or via a wireless connection.

During operation of a gas turbine engine 20 used to power an aircraft, the engine 20 may be controlled to operate in a plurality of different engine power settings; e.g., start-up, idle, taxiing mode, take-off, cruise, deceleration, and landing. These different engine power settings are likely to have different volumetric rates of bypass airflow and core gas flow. In some cases (e.g., idle versus take-off), the difference in the bypass airflow rate and the core gas flow rate can be significant. For example, the volumetric rate of core gas flow required to satisfy an idle power setting is likely to be substantially less than the volumetric rate of core gas flow required to satisfy a take-off power setting. The streamlines 76 (e.g., see FIG. 2) of air encountering the compressor inlet 42 region (e.g., the compressor inlet 42 itself and the region radially outside of the compressor inlet 42 but in close proximity to the compressor inlet 42) may vary as a result of the engine 20 power setting. In some cases, bypass airflow passing within the bypass air path 38 may experience flow anomalies such as separation downstream of the compressor inlet 42, adjacent the inner radial structure 40B of the bypass air path 38.

In addition, it is known that during ground and low above-ground altitude operations of an aircraft gas turbine engine 20 (e.g., idle, taxing, take-off and the like), there is a greater propensity for the engine 20 to ingest dirt and/or debris. The dirt and/or debris, if ingested into the core gas path of the engine 20 can produce detrimental effects such as debris build up on components, cooling passage cloggage, and the like. It is noted that at higher engine power settings (e.g., take-off) the rotational velocity of the fan section 28 disposed just forward of the compressor inlet 42 may be substantially greater than the rotational velocity of the fan section 28 at lower power settings (e.g., taxiing). The higher rotational velocities produce higher swirl velocities. Dirt and debris particles entrained within the swirling flow are subject to inertial forces that drive the particles radially outward.

The present disclosure provides a mechanism for selectively altering the flow area of the compressor inlet 42, including the radial position of the compressor inlet 42 outer circumference; i.e., the radial position of the IP leading edges 60. By selectively altering the compressor inlet 42 area and the radial position of the compressor inlet 42 outer circumference, the present disclosure is understood to provide several benefits.

For example, the present disclosure inlet panel structure actuation system 54 can be operated to actuate the inlet panel structures 52 to an inner configuration (e.g., the radial inner most configuration) during an engine 20 idle power setting, or during an engine 20 taxiing power setting, or during low above-ground altitude operations of the aircraft (e.g., take-off and low altitude climb), or any combination thereof. FIG. 3 diagrammatically illustrates the inlet panel structures 52 in a radial inner most configuration, and illustrates the gap distance ("Inner Most Gap" or "IMG") across the annular compressor inlet 42 in the radial inner most configuration; e.g., the distance between the inner radial surface 46 of the compressor inlet 42 and the IP leading edge 60. The actuation of the inlet panel structures 52 so that the IP leading edges 60 are translated radially inward, moves the IP leading edges 60 away from airflow streamlines 76 and any dirt and debris particles that may be entrained therein. The translation of the IP leading edges 60 radially inward is also understood to produce improved airflow streamlines 76 proximate the bypass side segment 58 of the inlet panel structures 52 and proximate the downstream inner radial structure 40B of the bypass air path 38. FIG. 3A diagrammatically illustrates the inlet panel structures 52 of the compressor inlet 42 in a radial outer most configuration, and illustrates the gap distance ("Outer Most Gap" or "OMG") across the annular compressor inlet 42 in the radial outer most configuration; e.g., the distance between the inner radial surface 46 of the compressor inlet 42 and the IP leading edge 60. The annular compressor inlet 42 may be controlled to be in the radial outer most configuration when the aircraft is at an altitude that is associated with "clean" or "debris-free" air. It should be noted that the demarcation between "dirty air" and "clean / debris-free" air may be a function of multiple factors, including the above-ground altitude at which the engine is operating, or the geographic location at which the engine is operating, or the calendar season in which the engine is operating, or the like, or any combination thereof. To be clear, the present disclosure inlet panel structure actuation system 54 can be operated to actuate the inlet panel structures 52 to any configuration; i.e., the radial inner most configuration, the radial outer most configuration, or any configuration therebetween.

Embodiments of the present disclosure may be configured so that the inlet panel structure actuation system 54 can be operated manually (e.g., input commands from an aircraft operator) to actuate the inlet panel structures 52 between the radial inner most configuration and the radial outer most configuration, or may be configured so that the inlet panel structure actuation system 54 is operated in an automated manner based on stored instructions (e.g., executed by the controller 74) with input from engine control systems indicative of the power setting of the gas turbine engine 20 and/or other operating parameters such as above-ground altitude, geographic location, calendar season, or the like, or any combination thereof. In some embodiments, the present disclosure may be configured to permit both automated operation and manual operation.

Embodiments of the present disclosure may be configured so that the inlet panel structure actuation system 54 can be operated manually (e.g., input commands from an aircraft operator) or operated in an automated manner based on stored instructions (e.g., executed by the controller 74) to shed an ice accumulation on the inlet panel structures 52. During certain operating conditions, water entrained within inlet air may accumulate on the inlet panel structures 52 and freeze. The inlet panel structures 52 can be actuated either manually or in an automated manner to dislodge the accumulated ice.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine, comprising:
a fan section;
a fan bypass air path;
a compressor section;
a combustion section;
a turbine section;
an annular compressor inlet; and
an inlet panel structure actuation system;
wherein the annular compressor inlet is defined by an inner radial surface and a plurality of inlet panel structures, wherein each inlet panel structure includes an inlet side segment and a bypass side segment, and the inlet side segments collectively define an outer radial surface of the compressor inlet;
wherein the inlet side segment and the bypass side segment of each inlet panel structure intersect at an inlet panel leading edge; and
wherein the inlet panel structures are disposable in a radial inner most configuration and in a radial outer most configuration, wherein in the radial inner most configuration, the inlet panel leading edge is disposed a first distance from the inner radial surface, and wherein in the radial outer most configuration, the inlet panel leading edge is disposed a second distance from the inner radial surface, and wherein the second distance is greater than the first distance; and
wherein the inlet panel structure actuation system is configured to selectively actuate the inlet panel structures between the radial inner most configuration and the radial outer most configuration.

2. The gas turbine engine of claim 1, wherein the gas turbine engine is configured to receive an inflow of air and configured such that the inflow of air received by the gas turbine engine comprises a first portion and a second portion, wherein the first portion is received within the compressor inlet and the second portion is received within the fan bypass air path.

3. The gas turbine engine of claim 2, wherein the fan bypass air path is defined by an inner radial structure and an outer radial structure; and
wherein the bypass segment of each inlet panel structure of the plurality of inlet panel structures is engaged with the inner radial structure of the fan bypass air path.

4. The gas turbine engine of any preceding claim, wherein in the radial inner most configuration the inlet panel leading edges are collectively disposed at a first radius, and in the radial outer most configuration the inlet panel leading edges are collectively disposed at a second radius, and the second radius is greater than the first radius.

5. The gas turbine engine of any preceding claim, wherein the inlet panel structure actuation system is configured to selectively pivot the inlet panel structures to translate the inlet panel leading edge of each inlet panel structure radially inward or radially outward.

6. The gas turbine engine of any preceding claim when dependent on claim 2, wherein the compressor inlet is disposed downstream of the fan section.

7. The gas turbine engine of claim 6, further comprising inlet guide vanes disposed within the compressor inlet.

8. The gas turbine engine of claim 7, wherein the inlet panel structure actuation system is configured to selectively pivot the inlet panel structures to translate the inlet panel leading edge of each inlet panel structure radially relative to the inlet guide vanes.

9. The gas turbine engine of claim 7 or 8, wherein the inlet guide vanes are configured for selective positioning.

10. The gas turbine engine of claim 9, wherein the inlet panel structure actuation system is configured to selectively actuate the inlet panel structures in coordination with the selective positioning of the inlet guide vanes.

11. The gas turbine engine of any preceding claim, wherein the inlet panel structure actuation system includes an actuator and a controller, wherein the controller is in communication with the actuator and a non-transitory memory storing instructions, which instructions when executed cause the processor to control the actuator to actuate the inlet panel structures between the radial inner most configuration and the radial outer most configuration.

12. The gas turbine engine of claim 11, wherein the controller is configured to receive input commands from an operator and act on the input commands to actuate the inlet panel structures between the radial inner most configuration and the radial outer most configuration; and/or
wherein the controller is configured to receive an engine power setting input and execute the stored instructions based on the engine power setting input to actuate the inlet panel structures between the radial inner most configuration and the radial outer most configuration; and/or
wherein the controller is configured to receive an aircraft altitude input value and execute the stored instructions based on the aircraft altitude input value to actuate the inlet panel structures between the radial inner most configuration and the radial outer most configuration; and/or
wherein the controller is configured to receive an aircraft geographical location data input and execute the stored instructions based on the aircraft geographical location data input to actuate the inlet panel structures between the radial inner most configuration and the radial outer most configuration; and/or
wherein the controller is configured to receive an operating parameter input and execute the stored instructions using the operating parameter input to determine a configuration of the annular compressor inlet.

13. The gas turbine engine of any preceding claim, wherein the inlet panel leading edge is disposed at an inflection point between the inlet side segment and the bypass side segment of each inlet panel structure.

14. The gas turbine engine of any preceding claim, wherein the inlet side segment and the bypass side segment are independent of one another, or
wherein the inlet side segment and the bypass side segment are integrally formed with one another.

15. The gas turbine engine of any preceding claim, wherein the gas turbine engine has a geared turbofan configuration.
